# EUROPEAN PATENT APPLICATION

(11) **EP 4 546 254 A1**
(43) Date of publication of application: **30.04.2025**
(21) Application number: 23306848.5
(22) Date of filing: 23.10.2023
(51) Int. Cl.: G06T 7/00, G06V 40/16

(54) **A SYSTEM AND METHOD FOR QUANTIFYING OR GENERATING DISTORTION IN IMAGES**

(71) Applicant: Amadeus S.A.S., 06410 Biot (FR)
(72) Inventor: THOMAS, Eoin, 06600 Antibes (FR); CAO, Hongliu, 06300 Nice (FR); RAVANEL, Alexis, 06600 Antibes (FR); DO, Minh Nhat, 06160 Juan-Les-Pins (FR)
(74) Representative: Samson & Partner Patentanwälte mbB

(57) **Abstract**

Disclosed is a method of generating a training image dataset from an input image of an imaged object. The method comprises: generating a three-dimensional model of the imaged object from the input image; generating a plurality of synthesized images which are two-dimensional representations of the generated three-dimensional model, obtained by simulating a plurality of image captures of the three-dimensional model, wherein for each of the plurality of simulated image captures, a theoretical value for a capture parameter at least partially characterising the simulated image capture is set to a respective one of a plurality of different values, wherein the input image is used as a reference image; For each synthesized image, a distortion amount in the synthesized image compared with the reference image is calculated, and a calibrated capture parameter value for each synthesized image is determined, on the basis of at least the calculated distortion amount of the synthesized image, distortion amounts calculated from real acquired images, and known capture parameter values used to acquire the real acquired images.

## Description

### TECHNICAL FIELD

This disclosure relates to the quantification of distortions in images, and automated facial authentication or identification systems where the facial identification algorithms are trained using data sets generated to include the quantified distortion estimate data, in particular to address potential performance issues of the algorithms when dealing with input images which are distorted due to mechanisms including perspective distortion.

### BACKGROUND ART

The use of biometrics in the authentication or identification of individuals is gaining traction in recent years, in particular given the advance in facial recognition and image processing techniques. An application for which such use can be readily adopted is the identification or registration of passengers, particularly in airports, where there are already self-serve kiosks where passengers can complete other functions such as checking into flights, printing boarding passes, or printing baggage tags. With the advance of computing and camera technologies, facial biometric verification also increasingly may be used in other scenarios, such as building access control.

In a facial biometric identification system, an image of a person's face is captured, analysed and compared with a database of registered faces to determine whether there is a match. Based on the result of this determination the system ascertains the identity of the person. However, the acquisition process whereby the facial image is captured may introduce distortions into the captured image, resulting in the captured facial image being a distorted presentation of the person's face. Some existing algorithms which make the biometric matching determination are designed to deal with intrinsic distortions such as lens distortions. However, the algorithms do not handle perspective distortions well, and their performance degrade when they operate on input images that include perspective distortions but need to match these images with undistorted reference images such as passport photos. It is possible to improve the performances of biometric matching algorithms which utilise machine-learning techniques, in handling images with perspective distortions, but this improvement requires that useful training data to be available. However, currently available data providing information regarding the amounts of distortion in images and the distances at which the images are acquired, is limited. An example is the Caltech Multi-Distance Portrait (CMDP) dataset which includes frontal portraits of 53 individuals, where multiple portraits are taken of each individual with the camera positioned at different distances from the person. The limited availability of data of this type impacts the ability to train and improve machine-learning based facial recognition or biometric matching algorithms.

It is to be understood that, if any prior art is referred to herein, such reference does not constitute an admission that the prior art forms a part of the common general knowledge in the art in other country.

### SUMMARY

In a first aspect, there is disclosed herein a method of estimating an amount of distortion in an input image, comprising: identifying landmarks in an input object shown in the input image, the landmarks including an anchor landmark and a plurality of non-anchor landmarks; determining distances between the non-anchor landmarks and the anchor landmark in respect of the input object; determining distances between each of a plurality of non-anchor landmarks and an anchor landmark in respect of a reference object, the non-anchor landmarks and the anchor landmark in respect of the reference object being the same as the non-anchor landmarks and the anchor landmark identified in respect of the input object; comparing distances determined in respect of the input object with corresponding distances determined in respect of the reference object; and determining the amount of distortion on the basis of the comparison.

The anchor landmark may be centrally located amongst the identified landmarks.

Comparing distances determined in respect of the input object with corresponding distances determined in respect of the reference object can comprise: determining a plurality of differences, each difference being determined between a respective pair of corresponding distances, the respective pair of corresponding distances comprising a respective one of the distances determined in respect of the input object and a corresponding distance determined in respect of the reference object comprises.

The method can comprise: statistically fitting the differences at locations of the landmarks in respect of the input object or the reference object, to a difference model; and determining the amount of distortion on the basis of the difference model.

The difference model can be a Gaussian or Gaussian-like model.

The amount of distortion can be an integral value calculated from the difference model.

The image capture parameter can be a distance from which the image is acquired, and the distortion is a perspective distortion associated with the distance.

The reference object can be shown in a reference image, being an available image of the imaged object shown in the input image. The reference image may be an image which is known to have substantially no distortion.

The reference object can be determined from a statistically representative image or a statistically representative set of landmarks, for an object which is of a same type as the object shown in the input image.

The imaged object can be a face of a person.

In a second aspect, there is disclosed herein a method of generating an image dataset from an input image of an imaged object, comprising: generating a three-dimensional model of the imaged object from the input image; generating a plurality of synthesized images which are two-dimensional representations of the generated three-dimensional model, obtained by simulating a plurality of image captures of the three-dimensional model, wherein for each of the plurality of simulated image captures, a theoretical value for a capture parameter at least partially characterising the simulated image capture is set to a respective one of a plurality of different values, wherein the input image is used as a reference image. The method comprises, for each synthesized image, calculating a distortion amount in the synthesized image compared with the reference image; and determining a calibrated capture parameter value for each synthesized image, on the basis of the theoretical capture parameter value or the calculated distortion amount of the synthesized image or both, distortion amounts calculated from real acquired images, and known capture parameter values used to acquire the real acquired images. The training image data set comprises the synthesized images and their corresponding calibrated capture parameter values.

The calculation of the distortion amounts in the synthesized image can be in accordance with the distortion estimation method described in the first aspect above, where an object shown in the reference image is the reference object.

Generating the three-dimensional model can comprise modifying an initial model generated using the input image, to correct an artefact in the initial model, apply enhancement, or both.

Modifying the initial model can comprise in-painting a void region in the initial model caused by a two-dimension to three-dimension transition during an initial model generation from the input image.

Determining the calibrated capture parameter value for each synthesized image can comprise referencing a relationship model describing a relationship between distortion amounts in the real acquired images and the known capture parameter values.

Determining the calibrated capture parameter value can further comprise: determining a theoretical relationship model describing a relationship between calculated distortion amounts in the synthesized images and the theoretical values of the capture parameter used to generate the synthesized images; adjusting the theoretical relationship model to find a best fit to the reference relationship model, wherein the adjusted relationship model providing the best fit is determined as the calibrated relationship model; and for each synthesized image, finding its calibrated capture parameter value on the basis of its distortion amount and the calibrated relationship model.

The reference relationship model can be predetermined.

The training image data set can comprise the real acquired facial images.

In a third aspect, there is disclosed herein a method of training a facial recognition algorithm, comprising obtaining one or more input facial images, using each of the input facial images to generate a respective dataset in accordance with the method mentioned above, and using the datasets as training data. The datasets can be utilised by being included into existing set of training data to augment the existing training data. The use of the generated datasets in the training data helps to train the facial recognition algorithm to deal with perspective distortion in input images.

The training data can be provided for training a generative adversarial network for training or augmenting the facial recognition algorithm. The generative adversarial network trained using the training data is expected to be able to generate more realistic or higher resolution of distorted images, which can be used to train the face recognition algorithm.

In a fourth aspect, there is disclosed herein a method of determining a value of an image capture parameter which at least partially characterises how an input image is captured or generated, comprising: determining an amount of distortion in the input image, in accordance with the distortion estimation method mentioned above in the first aspect; determining a calibrated capture parameter value for each synthesized image, on the basis of a relationship model describing a relationship between distortion amounts in images and values of the image capture parameter.

The relationship model can be determined on the basis of distortion amounts in real acquired images and known capture parameter values used to acquire the real acquired images.

The relationship model can be a calibrated relationship model, the calibrated relationship model being generated by: generating one or more datasets, using a respective one of one or more training images showing imaged objects of a same type as the imaged object in the input image; determining the relationship model using the distortion amounts and corresponding calibrated capture parameter values from the datasets. The generation of the datasets may be in accordance with the second aspect disclosed above.

The capture parameter can be a distance between the imaged object and a camera that acquired the input image of the imaged object.

In a fifth aspect, there is disclosed herein a facial identification apparatus, comprising a processor configured to execute machine instructions which implement a facial recognition algorithm to identify a user identity from a facial image of a user, wherein the facial recognition algorithm is trained in accordance with the training method mentioned above in the third aspect.

The facial image can be acquired using a local device used or accessed by the user and provided to the facial identification apparatus over a communication network.

The processor can be provided by a server system hosting a biometric matching service.

### BRIEF DESCRIPTION OF THE DRAWINGS

Embodiments will now be described by way of example only, with reference to the accompanying drawings in which
**Figure 1** schematically depicts a system for automated dataset generation, according to one embodiment;
**Figure 2** schematically depicts a method for automated dataset generation using a seed image, according to one embodiment;
**Figure 3-1** schematically depicts an embodiment of a system for determining an amount of distortion, according to one embodiment;
**Figure 3-2** schematically depicts a distortion estimation process, according to one embodiment;
**Figure 4-1** shows an image depicting a face;
**Figure 4-2** shows an image depicting the same face with distortion;
**Figures 5-1 to 5-4** include figures showing (a) a reference image, (b) various input images, (c) the overlay of landmark points for each pair of reference and input images, (d) the fitted Gaussian surfaces which model the radial errors between the landmark points of each pair of reference and input images, and (e) estimated distortion quantities in the input images;
**Figure 6-1** conceptually depicts a plot of estimated distortion quantities for real images versus known capture distances for the images, illustrating how to determine calibrated capture distances for the synthesized images according to one embodiment;
**Figure 6-2** conceptually depicts a plot of estimated distortion quantities for real images versus known capture distances for the images, and a curve fitted to the datapoints on the plot, illustrating how to determine calibrated capture distances for the synthesized images, according to another embodiment;
**Figure 6-3** conceptually depicts the concept of determining a calibrated curve for the synthesized images, using a curve fitted to the datapoints for the real images, and a curve fitted to the data point for synthesized images;
**Figure 7** conceptually depicts a system for biometrically identifying a user.

### DETAILED DESCRIPTION

In the following detailed description, reference is made to accompanying drawings which form a part of the detailed description. The illustrative embodiments described in the detailed description, depicted in the drawings, are not intended to be limiting. Other embodiments may be utilised and other changes may be made without departing from the spirit or scope of the subject matter presented. It will be readily understood that the aspects of the present disclosure, as generally described herein and illustrated in the drawings can be arranged, substituted, combined, separated and designed in a wide variety of different configurations, all of which are contemplated in this disclosure.

Aspects of the disclosure will be described herein, with examples in the context of facial biometric identification of persons such as air-transit passengers or other travellers. However, the technology disclosed is applicable to any other automated systems utilising facial biometrics. Moreover, the disclosed technology may be generalised toward the processing of images of objects other than face, for applications in which distortions in the images need to be quantified or addressed, such as applications for identification or recognition of the objects.

In the context of air travel, the capture and biometric analysis of a passenger's face can occur at the various points, such as at flight check-in, baggage drop, security, boarding, etc. For example, in a typical identification system utilising facial biometric matching, the identification system includes image analysis algorithms, which rely on input images taken with cameras at the checkpoints or with cameras in the passengers' mobile devices.

Facial images taken with the passengers' mobile devices may be "selfie" image, which tend to be distorted in comparison to the passenger's face, due to the camera being held at a relatively short distance to the face. It is also possible that at a biometric checkpoint, the passenger can stand at a distance that is close enough to the camera at the checkpoint that distortion occurs. The type of distortion, resulting from a short distance between the camera "viewpoint" and the imaged object (i.e., the passenger's face), is referred to as "perspective distortion". In the case of facial images, perspective distortions typically result in a dilation of the nose region in the face and a compression of the side regions of the face such as the ears, when the images are acquired from a close distance, which is often the case when the images are acquired using a webcam or selfie camera. Other types of distortion mechanisms may be due to the design of the camera lens, such as barrel or pincushion distortions. These distortions cause the input image which is acquired to be distorted relative to what the passenger's face would look like in the absence of such distortion mechanisms.

When such a distorted input image is provided to a biometric identification system, if the system has not been trained to deal with input images with built-in distortions, the identification system may not perform as expected.

Herein disclosed includes a method and system for handling input images with potential distortions. In a first aspect, embodiments of the present invention include a method and system of generating datasets comprising images with different amounts of distortions in the images, and calibrated estimates of the distances at which the images are captured (hereinafter, "capture distances") which caused the distortions. The generated datasets may be used for purposes such as training facial recognition algorithms or facial biometric matching algorithms. The generation of the datasets is automated, meaning it is not necessary to manually take real photos of individuals.

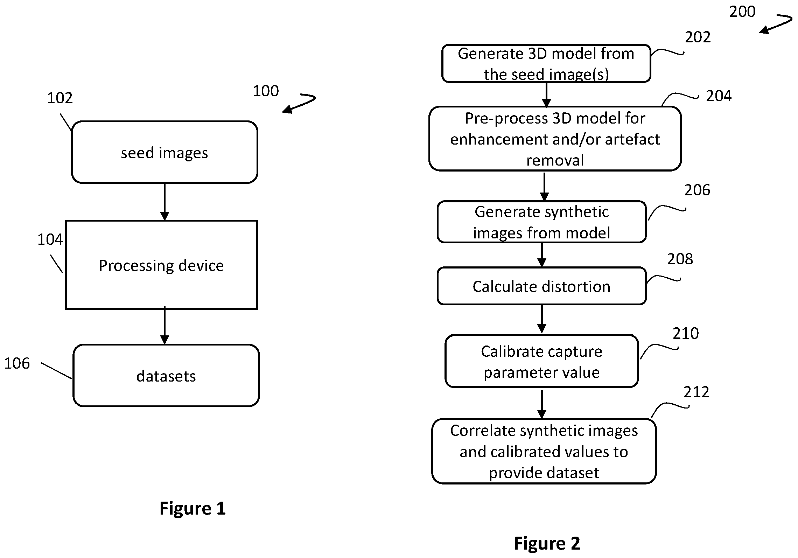

Figure 1 schematically depicts a system 100 for automated dataset generation. The system 100 comprises a database containing, or has access to, seed images 102 in which perspective distortions are assumed to be minimal or not present. The seed images 102 may be located at a data repository such as a memory location, a database or may be stored at distributed locations, or may be obtainable by data scraping. The system 100 includes a processing device 104 configured to process each input image and generate a dataset 106 on the basis of the seed image. The processing device 104 may be the processing unit or processor of a computer or a server arrangement. The processing may be distributed across different computers or servers, in which case the processing device will be collectively provided by computing devices distributed from across different locations. The processing device 104 is configured to execute machine code to implement the method for automated dataset generation.

Figure 2 schematically depicts the method 200 for automated dataset generation using a seed image. At step 202, a three-dimensional (3D) model is generated using the seed image. The 3D model may be a mesh model. The generation of the 3D model can be performed using currently available algorithms. For example, 3D face reconstruction algorithms such as the DECA (Detailed Expression Capture and Animation) model can be used to generate a 3D model of the face from one seed facial image. As a variation, in some embodiments two or more images for the same face may be used to generate the 3D model using an algorithm selected by the skilled person. Optionally, the generated 3D model is processed to enhance it or to remove artefacts (step 204). For instance, the processing may include in-painting a void region in the initial model caused by a two-dimension to three-dimension transition during the generation of the model from the seed image. The processing may include applying operations such as filtering, smoothing, etc.

At step 206, a plurality of synthesized two-dimensional images of the 3D model will be generated, each by simulating the capture of an image of the 3D model, where a capture parameter at least partially characterising the image capture is set at a corresponding value, and rendering the simulated captured image. A perspective camera model can be used to simulate the "virtual camera" capturing the 3D model at a particular fixed field of view. The simulated capture parameter value is changed to different values in order to generate synthesized images virtually captured at different perspectives.

In the context of facial biometric identification, the rendered image is the simulated portrait of the 3D face, and the capture parameter is the theoretical capture distance. That is, the system simulates the image capture of the 3D facial object model at various capture distances, to synthesize facial images with different capture perspectives.

At step 208, the estimated amounts of distortions in the synthesized images are determined, in comparison to the seed image used to generate the synthesized images. Correlating the simulated images with their respective theoretical capture parameter values, i.e., capture distances, will provide a dataset from the input image. However, in some embodiments, the theoretical capture distances will be calibrated against real images and their known capture distances, before being correlated with the input images. This helps to remove potential biases within the system or the perspective camera model used which may skew the relationship between the theoretical capture distances and the associated amounts of distortion in the synthesized, in comparison to what may be observed in the real world. The process 200 shown in Figure 2 includes the calibration step (step 210), but this step may be omitted in this and other embodiments.

At step 210, on the basis of the estimated amounts of distortion in each synthesized image, the theoretical capture distance associated with that synthesized image is calibrated. This calibration utilises the relationship between distortions observed in real acquired images and their known capture distances.

The same algorithms will be used for the calculation of the amounts of distortions in the real images and for the calculation of the amounts of distortions in the synthesized images. At step 212, the synthesized images are correlated with their respective calibrated capture distances, in order to produce the output dataset.

Different methods of quantifying distortion may be used. For instance, to calculate the distortion in a synthesized image compared with the seed image used to generate the synthesized image, the distortion may be quantified by applying a direct comparison between the pixels of the images. In another example, the two images may each be processed to identify particular areas, landmarks, or features. The areas, landmarks, or features respectively identified from the two images are then compared to determine the distortion, e.g., by checking a difference in the respective sizes or dimensions, a difference in the respective locations of the features in relation to the corresponding images.

In the real world, even where there are no distortions associated with a person's facial image, that facial image may still look different to the person's portrait in the passport or another identity document. This is because in some cases the person may be tilting their head or their face may not be centred with respect of the centre of the camera's field of view, resulting in a facial image which is rotated or shifted with respect to the centre of the camera's field of view, in addition to any distortion that may be introduced due to the lens used or the capture perspective. In some scenarios, a traveller may place his or her passport in a slightly mis-aligned manner into the scanner of an airport checkpoint, so that a resulting scan of the passport photo will be misaligned relative to the field of view of the scanner. Thus, preferably, the quantification of the distortion will not be significantly affected by such rotations or translations.

Embodiments according to an aspect disclosed herein provide a method for estimating the distortion in a first, "input", image in comparison to a second, "reference" image. The method for providing the estimation is designed so that the calculated estimate will not be significantly affected by possible rotations or translations in the input image or the reference image.

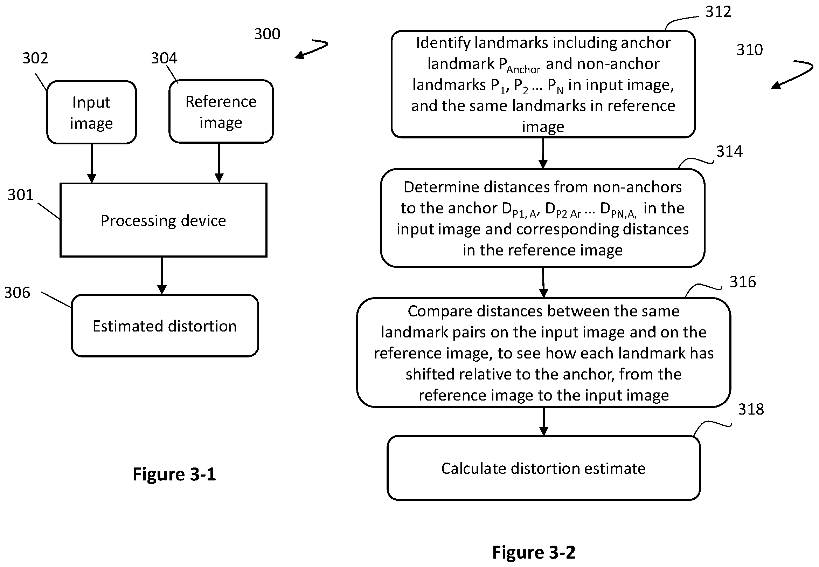

Figure 3-1 schematically depicts an embodiment of a system 300 for determining an amount of distortion in an input image in comparison to a reference image in which there is assumed to be no distortion. However, in embodiments where the reference image also contains distortion, then the system will quantify the difference between the amounts of distortions in the input image and the reference image, i.e., quantify the relative distortion. The system 300 may be implemented as a stand-alone program, as a module within an application, or as a collection of one or more sub-routines within a module or an application. The processing device 301 implementing the system 300 may be a stand-alone device or part of an arrangement of networked or connected devices. The system 300 is configured to receive an input image 302 to determine an amount of distortion present in the input image 302. The system 300 is configured to receive the reference image 304. Alternatively the reference image 304 is available from a memory location accessible by the processing device 301. The processing device 301 is configured to implement algorithms to estimate the distortion 306 in the input image 302 relative to the reference image 304. It is assumed that there is no distortion in the reference image 304. The reference image 304 may be an image of the same object which is shown in the input image 302, and is assumed to have substantially no distortion. In the context of facial images, the reference image 304 is an undistorted (or assumed as undistorted) facial image of the person whose face is shown in the input image 302. In the context of air travel this may be provided by the passport photograph for the person whose facial image is currently being used as the "input image".

Alternatively, the reference image 304 may be a statistically representative image for an object of the type shown in the input image 302. In the context of facial images, the reference image 304 would be the image of a "face" considered to be statistically representative of all faces, or the faces of people identified to be in the same category or categories (e.g., gender, race, age or age bracket, etc) as the person whose face is shown in the input image 302, e.g., female, Caucasian, child. This is useful when there is no undistorted image available to use as the reference. Different ways of obtaining the statistically representative image may be used, such as by creating an "average" image or a composite image where each feature shown in the composite image is a statistical representative (e.g., average) of that particular type of feature (e.g., face shape, nose, eye separation, etc, mouth width, lips thicknesses, etc.).

Figure 3-2 schematically depicts processing performed by the processing device 301 to implement a distortion estimation method, according to one general embodiment.

The distortion estimation processing 310 in this embodiment is based on landmarks. At step 312, a plurality of landmarks of the object shown in the input image are identified, and the same set of landmarks of the object shown in the reference image are also identified. Appropriate object detection (e.g., face detection) algorithms will be used to locate the object in the input image and in the reference image prior to the landmark identification. In the context of facial images, this means to identify a set of biometric facial landmark points in respect of the face shown in the input image. The same landmarks are also identified in respect of the face shown in the reference image. The set of landmarks will include an anchor landmark P_{A} and the rest are non-anchor landmarks P₁, P₂, ... etc. The anchor landmark A may be a centrally located landmark amongst the identified landmarks, such as a landmark on the nose of a face.

Next, at step 314, for each of the input image and the reference image, the distances (L) of each of the non-anchor landmarks from the anchor landmark from the same image will be calculated. This calculation results in L _{(P1, A)_input}, L _{(P2, A)_input}, ... etc for landmarks P1, P2, .. etc in respect of the face (object) shown on the input image, and L _{(P1, A)_ref}, L _{(P2,A)_ref,}... etc for landmarks P1, P2, ... etc, in respect of the face (i.e., object) shown in the reference image. At step 316, distances between the same landmark pairs on the input image and on the reference are compared. Therefore, for a given landmark P, the change in its distance to the anchor A, from the reference image to the input image, can be expressed as *Δ_{P}* = L _{(P, A)_input} - L _{(P, A)_ref}. The difference *Δ_{P}* represents how much the landmark P has shifted radially with respect to the anchor, due to the distortion, i.e., from the reference image to the input image. The differences *Δ_{P},* P= P1, P2... PN may therefore also be considered as "radial" errors in the input image at each non-anchor landmark point, due to the effect of the distortion.

At step 318, the results from the comparison, i.e., the radial errors at the landmarks *Δ_{P},* P= P1, P2... PN, are used to estimate an amount of distortion in the input image relative to the reference image.

The calculation of the distortion estimate at step 318 may be done differently in different implementations. Statistical methods can be applied to the comparison results from step 316 in order to obtain a quantified estimate of the distortion. For example, the radial errors at the landmarks *Δ_{P},* P= P1, P2... PN, can be "attached" to the coordinates of the landmark positions in the input image. The difference *Δ_{P}* in the distances can therefore be expressed as a function of the landmark's position *Δ_{P}* = *f(x_{P},y_{P})* in the input image.

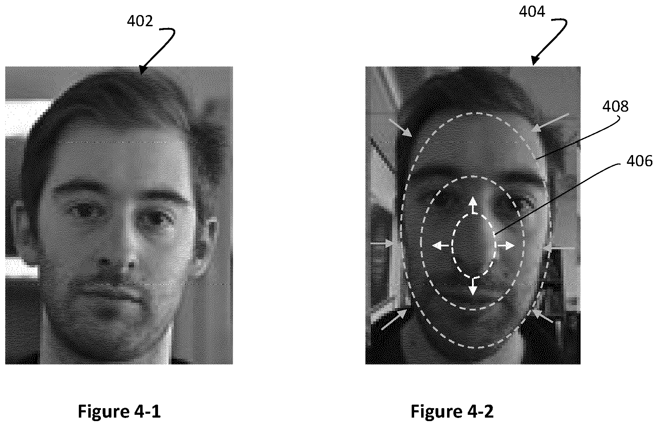

In some examples, the calculation involves statistically modelling the radial errors as a multivariate function, and then quantifying the distortion on the basis of the model, such as by calculating particular parameters associated with the model. As shown in Figure 4-1 and Figure 4-2, for a "face" object 402, the "perspective distortion" resulting from wide fields of view, tends to result in a distorted face object 404 where there is a dilation 406 near the centre of the face which would be closer to the camera, and a compaction 408 of features nearer to the border of the face. Therefore, the radial errors *Δ_{P}* = *f(x_{P},y_{P})* may be approximated as a Gaussian or Gaussian-like function. In an embodiment, the amount of distortion in the input image is quantified as a volume under the Gaussian or Gaussian-like surface approximating the radial errors. Therefore, if there is little or no distortion in the input image, the approximated function or surface is expected to be fairly flat and the volume is expected to be small. However if there is more significant distortion, the volume is expected to be larger.

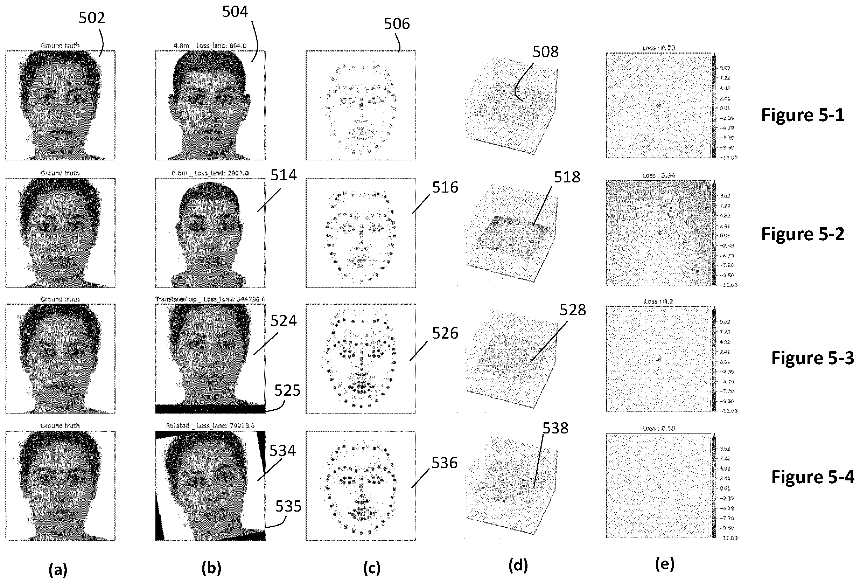

As described above, in the error estimation process 310, the comparison is made between inter-landmark distances between corresponding landmark-anchor landmark pairs on the reference image and on the input image, to find the "radial error" associated with each landmark. A rotation or a translation, or both, of the imaged object relative to the field of view of the camera, is not expected to affect or significantly affect the inter-landmark distances within the same image. Therefore, the results from the comparison will not be significantly impacted by rotations or translations of the imaged object (i.e., face) relative to a centre of the camera field of view, in the input image or the reference image. Therefore, the estimated distortion amount will also be robust against rotations or translations. This is illustrated in Figures 5-1 to 5-4.

In Figures 5-1 to 5-4, image 502 is the "ground truth" image used as the reference image. Images 504, 514, 524, 524 are "input images" in which amounts of distortion are being quantified. Image 504 is a computer-generated 2D render image of a 3D model of the face which is shown in image 502, where the computer-generated image simulates an image captured at a distance which is far enough from the object to not cause significant distortion. In this example the simulated distance is 4.8 metres. Image 514 is another computer-generated image of the 3D model, simulating an image captured at a close distance (for this example, 0.8 metres) where perspective distortion will be introduced. Image 524 is the same as the reference image 502 except it is shifted slightly upwardly in the field of view 525. Image 534 is the same as the reference image 502 except it is rotated counter-clockwise in the field of view 535.

Images 506, 516, 526, 536, show the overlays of landmark points of each pair of reference and input images, respectively images 502 and 504, images 502 and 514, images 502 and 524, and images 502 and 534. Graphs 508, 518, 528, 538, respectively show the Gaussian or Gaussian-like surfaces obtained by approximating the radial errors between the landmark points of each of the four image pairs. As can be seen from the landmark overlay image 526, even though the landmarks in image 524 have individually shifted the most from their respective positions in image 502, there is no "radial error" in the image 524, because it is identical to image 502, so from image 502 to image 524, the non-anchor landmarks have not changed their positions relative to the anchor. The graph 528 which shows a Gaussian surface centred at the anchor, to statistically approximate a model for the radial errors, is almost flat. On the other hand, the surface 518 approximating a model for the radial errors in image 514 is much more pronounced in having central values which are different than the border values. The estimated distortion amount calculated from graph 518 is significantly larger than those calculated from graphs 508, 528 and 538.

The process explained above with reference to Figure 4 can be utilised for the distortion calculation step 208 in the process explained with reference to Figure 2. However, the approach for quantifying the distortion based on radial distances between landmarks, exemplified by the embodiments of the general type illustrated in Figure 4, may be applicable in other situations.

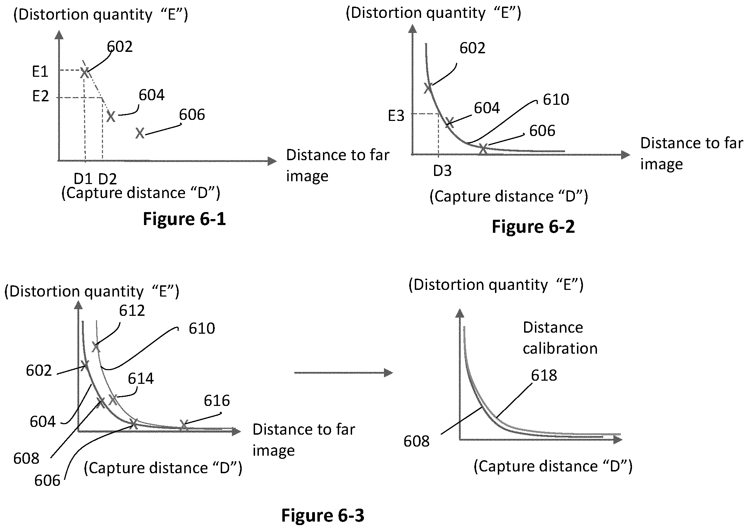

In Figure 2, it is mentioned that the "theoretical" capture distance may be calibrated at step 210, using a predetermined relationship between distortions which have been quantified in respect of real acquired images in the same way that the distortions in respect of synthesized images are quantified, and known capture distances for these real images. The calibration may be performed in different manners. Examples are shown in Figures 6-1 to 6-3. It will be understood that that although only three data points in respect of the real images and only three data points in respect of the synthesized images are shown in the Figures 6-1 to 6-3, the small number of data points used merely serves to illustrate the concept while ensuring the drawing figures remain uncluttered.

Figure 6-1, which conceptually depicts a plot of estimated distortion quantities versus capture distance, where the points 602, 604, 606 conceptually represent data in respect of real images. For a synthesized image in respect of which the distortion quantity is estimated at value "E1", a best match amongst the distortions quantified for the real images is identified as belonging to datapoint 602, and the calibrated distance for the synthesized images is determined on the basis of the best match. For instance, the calibrated capture distance is determined as the capture distance D1 associated with the "best match". In another approach, the calibrated capture distance D2 associated with distortion quantity "E2" may be extrapolated from data points 602, 604 representing distortion estimates vs capture distances of real images. The two approaches may be combined. For instance, if there is no "best match" for a distortion quantity calculated in respect of image which is within a particular threshold, then the calibrated capture distance is determined using extrapolation from data points in respect of real images.

In the example shown in Figure 6-2, a curve 608 which describes the relationship model between the data points 602, 604, 606 in respect of the real images is determined. For a distortion quantity estimated at E3, the calibrated capture distance D3 may be determined based on the curve 608. The curve 608 may be determined using statistical approaches such as regression analysis.

The examples shown in Figures 6-1 and 6-2 rely on datapoints built using distortion quantities calculated in respect of available images and the known capture distances in respect of these images. However, calibration may alternatively be performed using, in addition to these data points, the distortion quantities calculated in respect of synthesized images and their theoretical capture distances.

In the example shown in Figure 6-3, a relationship model as represented by curve 608 describing the relationship between distortion quantities and real capture distances associated with these quantities is shown. This may be predetermined. This relationship model is referenced in the determination of the calibrated capture distances. A theoretical relationship model as represented by curve 610 is also determined, to describe the relationship between distortion quantities calculated in respect of the synthesized images generated from an input image, and the theoretical capture distances associated with the synthesized images. The curve 610 is determined using the theoretical data points e.g., 612, 614, 616. The theoretical relationship model as represented by curve 610 is adjusted to align it with the real relationship model as represented by curve 608, to obtain a calibrated relationship model as represented by curve 618, for the input image from which the synthesized images are generated. The calibrated capture distances D' are obtained using the quantified distortion estimates and the calibrated relationship model 618. In one example, the adjustment is made by looking for a normalising distance "N" to be added to or subtracted from the theoretical distances (D) to determine an adjusted distance (e.g., D' = D -N), such that the resulting "curve" 618 determined in respect of the adjusted data points of (E, D') can be considered a best aligned fit for the curve 608 for the real data points.

Processes described with reference to Figures 6-1 to 6-3 may also be used in applications other than dataset generation. For example, given an input image, a distortion amount can be estimated in respect of the input image using these processes. The capture distance corresponding to the distortion amount can be determined using known data points for real acquired images and their known capture distances, using processes described with reference to Figure 6-1 or 6-2. Or, if a calibrated relationship model for the subject of the input image has been or can be determined, then the capture distance can be estimated on the basis of the calibrated relationship model, as in the process described with reference to Figure 6-3.

As another example, the determination of the calibrated relationship model as included in the process shown in Figure 6-3 may itself be provided as a stand-alone process or included into another application, where it is desired that a model describing a relationship between perspective distortion and capture distance, be obtained.

Referring back to Figure 2, if the dataset generation 200 is intended to create a dataset in which dataset(s) comprising real images and their known capture distances is or are mixed with the synthesized images and their calibrated capture distances, then the calibration process involves both the real data points and theoretical data points associated with the synthesized images. Datasets generated using the process described with reference to Figure 2 or generalised embodiments thereof, where the images are facial images, whether on their own or mixed with datasets containing real data, can be used to provide training data. For example, this can provide training data for the facial recognition algorithm, or for a generative adversarial network which is intended to train or augment facial recognition algorithms. The generative adversarial network trained using the training data is expected to be able to generate more realistic or higher resolution of distorted images, which can be used to train the face recognition algorithm.

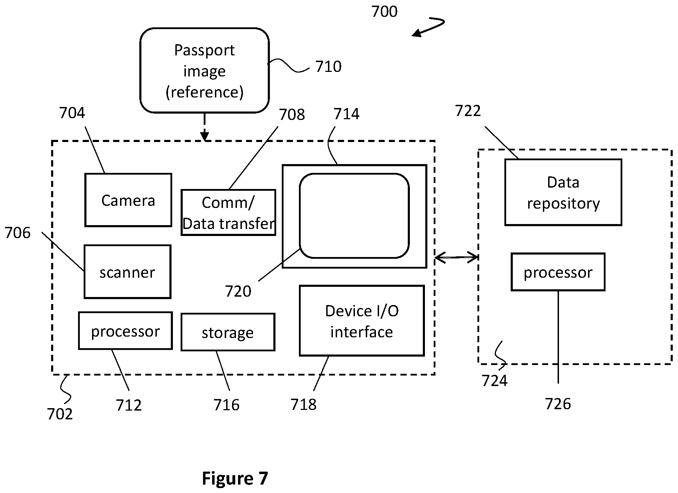

Figure 7 conceptually depicts a system for biometrically identifying a user, using facial recognition algorithms which have been trained directly or indirectly using training data comprising the data generated in accordance with the process described with reference to Figure 2. The system 700 includes a device 702. The device 702 includes a camera 704 for capturing a facial image of a user, or it receives or has access to a facial image of a user over a communication network, or both. In this example, it is also configured to obtain a reference image for the user. This may be implemented by including a scanner 706 in, or connecting a scanner to, the device 702, so that a reference image provided by the user (e.g., a passport image) can be scanned. Alternatively or additionally, the device 702 may include a communication and/or data transfer module 708 so that it can receive the reference image 710. However, in some embodiments the device 702 does not require a scanner or process any reference image, for example where the device 702 is intended to facilitate remote online check-in. The device 702 includes a processor 712, which may be a central processing unit or another processor, configured to execute machine instructions. The machine instructions 720 may be stored in a memory device 714 collocated with the processor 712 as shown, or they may be partially or wholly residing in one or more remote memory locations accessible by the processor 712. The processor 712 may also have access to data storage 716 adapted to contain the data to be processed, and possibly to at least temporarily store results from the processing. The machine instructions may be configured to implement algorithms, modules, or subroutines required to, e.g., interact with the user, perform at least some pre-processing of the image to provide data to be used as pre-processed input for biometric matching, or perform at least some processing required for biometric matching, etc. The device 702 in this example includes a device interface 718 so that it can interact with the user.

For example, the machine instructions include a module 720 for building synthesized images from the reference image and obtaining calibrated capture distances in respect of these images so that they can be provided to a data repository 722. The data repository 722 may be located within a server system 724 with which the device 702 is in communication. The server system 724 may include a processor or processor system 726 configured to execute program code to, e.g., train a facial recognition system or train a generative adversarial network that will train the facial recognition system. The facial recognition system thus trained is expected to be better able to deal with input images which contain distortions. The data in the data repository may instead or also be used as testing or validation data, and the processor or processing system 726 may be configured to execute program code to use the data to test or validate a facial recognition system, such as by testing to see its performance generally, or to see how well it performs in recognising diverse faces of different genders, ages, ethnicities etc.

The device 702 can be used in an air-travel context. For example it can be a facial identification apparatus for biometrically identifying travellers. Such an apparatus may be used as a touch point at an airport, e.g., at check-in, bag-drop, boarding gate, etc, where the input facial image acquired by or provided to the touch point will be used to identify the traveller.

As another example the facial identification apparatus is provided by the processing device of a server or server arrangement, configured to receive facial images from the travellers' devices such as mobile phones or tablets. In this example the facial identification apparatus does not necessarily need to have the camera or the scanner. The server or server arrangement may host the biometric matching service for determining the identity of the traveller. A correct result can be communicated to a departure control system to obtain boarding pass information. The boarding pass information may be communicated to the traveller's device.

Because the facial recognition algorithm(s) used to perform the identification has been trained using datasets with images taken at different fields of view from the camera, it will be better able to correctly identify the traveller, particularly where the input image has been acquired by a wide field of view camera which permits a close capturing distance, as is typically the case when the input image has been captured using a selfie camera.

Variations and modifications may be made to the parts previously described without departing from the spirit or ambit of the disclosure. For example, in embodiments where the distortion is quantified based on landmarks, the landmarks and/or the quantities associated with the landmark on the reference object can be predetermined, rather than computed anew each time. For example, where the reference object is a "statistically representative" reference object, it may not be necessary to utilise a reference image showing the reference object in the algorithm. Rather, the landmarks for a statistically representative object can be pre-determined, the radial distances between each non-anchor landmark and anchor landmark pair, or both, can be predetermined and stored so that they are already available during the distortion estimation calculations. This variation may be made to all embodiments wherein the determination of a distortion estimate involves using landmarks for a statistically representative object.

In claims which follow and in the preceding description, except where the context requires otherwise due to express language or necessary implication, the word "determine" and its variants such as "determining", is used to mean the ascertainment of particular quantitative or qualitative evaluation, parameter, data, model, or any other of information, whether this information is predetermined and is obtained by reading it from a memory or data storage location, receiving it as an input, or whether the information is obtained by carrying out or implementing algorithms to calculate or arrive at the information in cases where the information is not already pre-determined.

In the claims which follow and in the preceding description, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the disclosure.

## Claims

1. A method of estimating an amount of distortion in an input image , comprising:
identifying landmarks in an input object shown in the input image, the landmarks including an anchor landmark and a plurality of non-anchor landmarks;
determining distances between the non-anchor landmarks and the anchor landmark in respect of the input object;
determining distances between each of a plurality of non-anchor landmarks and an anchor landmark in respect of a reference object, the non-anchor landmarks and the anchor landmark in respect of the reference object being the same as the non-anchor landmarks and anchor landmark identified in respect of the input object;
comparing distances determined in respect of the input object with corresponding distances determined in respect of the reference object; and
determining the amount of distortion on the basis of the comparison.

2. The method of claim 1, wherein the anchor landmark is centrally located amongst the identified landmarks.

3. The method of claim 1 or claim 2, wherein comparing distances determined in respect of the input object with corresponding distances determined in respect of the reference object comprises:
determining a plurality of differences, each difference being determined between a respective pair of corresponding distances, the respective pair of corresponding distances comprising a respective one of the distances determined in respect of the input object and a corresponding distance determined in respect of the reference object comprises.

4. The method of claim 3, comprising:
statistically fitting the differences at locations of the landmarks in respect of the input object or the reference object, to a difference model; and
determining the amount of distortion on the basis of the difference model.

5. The method of claim 4, wherein the difference model is a Gaussian or Gaussian-like model.

6. The method of claim 5, wherein the amount of distortion is an integral value calculated from the difference model.

7. The method of any one of claims 1 to 6, wherein the image capture parameter is a distance from which the image is acquired, and the distortion is a perspective distortion associated with the distance.

8. The method of any one of claims 1 to 7, wherein the reference object is:
shown in a reference image, being an available image of the imaged object shown in the input image; or
determined from a statistically representative image or a statistically representative set of landmarks, for an object which is of a same type as the object shown in the input image.

9. A method of generating an image dataset from an input image of an imaged object, comprising:
generating a three-dimensional model of the imaged object from the input image;
generating a plurality of synthesized images which are two-dimensional representations of the generated three-dimensional model, obtained by simulating a plurality of image captures of the three-dimensional model, wherein for each of the plurality of simulated image captures, a theoretical value for a capture parameter at least partially characterising the simulated image capture is set to a respective one of a plurality of different values, wherein the input image is used as a reference image;
for each synthesized image, calculating a distortion amount in the synthesized image compared with the reference image, in accordance with the method of any one of claims 1 to 8, wherein an object shown in the reference image is used as the reference object;
determining a calibrated capture parameter value for each synthesized image, on the basis of the theoretical capture parameter value or the calculated distortion amount of the synthesized image or both, distortion amounts calculated from real acquired images, and known capture parameter values used to acquire the real acquired images;
wherein the training image data set comprises the synthesized images and their corresponding calibrated capture parameter values.

10. The method of claim 9, wherein determining the calibrated capture parameter value for each synthesized image comprises referencing a relationship model describing a relationship between distortion amounts in the real acquired images and the known capture parameter values.

11. The method of claim 10, wherein determining the calibrated capture parameter value further comprises:
determining a theoretical relationship model describing a relationship between calculated distortion amounts in the synthesized images and the theoretical values of the capture parameter used to generate the synthesized images;
adjusting the theoretical relationship model to find a best fit to the reference relationship model, wherein the adjusted relationship model providing the best fit is determined as the calibrated relationship model; and
for each synthesized image, finding its calibrated capture parameter value on the basis of its distortion amount and the calibrated relationship model.

12. A method of training a facial recognition algorithm, comprising obtaining one or more input facial images, using each of the input facial images to generate a respective dataset in accordance with the method of any one of claims 9 to 11, and using the datasets as training data.

13. The method of claim 12, wherein the training data is provided for training a generative adversarial network for training or augmenting the facial recognition algorithm.

14. A method of determining a value of an image capture parameter which at least partially characterises how an input image is captured or generated, comprising:
determining an amount of distortion in the input image compared with a reference image, in accordance with the method of any one of claims 1 to 8;
determining a calibrated capture parameter value for each synthesized image, on the basis of a relationship model describing a relationship between distortion amounts in images and values of the image capture parameter.

15. A facial identification apparatus, comprising a processor configured to execute machine instructions which implement a facial recognition algorithm to identify a user identity from a facial image of a user, wherein the facial recognition algorithm is trained in accordance with the method of claim 12 or claim 13.
